# EUROPEAN PATENT SPECIFICATION

(11) **EP 0 282 562 B1**
(45) Date of publication and mention of the grant of the patent: **07.04.1993**
(21) Application number: 87906333.7
(22) Date of filing: 03.09.1987
(51) Int. Cl.: C09J 5/00

(54) **METHOD AND APPARATUS FOR STEAM LAMINATION**
VORRICHTUNG UND VERFAHREN ZUR DAMPFLAMINIERUNG
PROCEDE ET DISPOSITIF DE STRATIFICATION A LA VAPEUR

(30) Priority: 10.09.1986 US 905405
(43) Date of publication of application: 21.09.1988
(73) Proprietor: ASTECHNOLOGIES, INC., Roswell, GA 30075 (US)
(72) Inventor: ELLIOT, George M., Alpharetta, GA 30201 (US); WATFORD, Ervin Lee, Jr, Rome, GA 30161 (US); HOWELL, George W., Nelson, GA 30151 (US)
(74) Representative: VOSSIUS & PARTNER
(86) International application number: US8702171
(87) International publication number: WO8802016

(56) References cited:
- DE-C- 3 401 839
- GB-A- 1 171 980
- US-A- 869 895
- US-A- 2 104 402
- US-A- 3 107 447
- US-A- 3 654 019
- US-A- 3 668 786
- US-A- 3 891 738
- US-A- 3 935 358
- US-A- 4 124 421
- US-A- 4 197 663
- US-A- 4 199 390
- US-A- 4 313 776
- US-A- 4 323 410
- US-A- 4 469 655
- US-A- 4 560 431

## Description

This invention relates to the steam lamination of two or more sheets of material using an adhesive that is activated by heat or moisture.

There are many manufacturing processes which require two or more sheets of material to be laminated together. In the clothing industry, for example, interlining fabric is laminated to suiting fabric to make it stiffer. In the shoe industry cloth interlinings are laminated to vinyl or leather uppers. In the auto industry upholstery fabric is laminated to cushion foam to make seat covers, door panels, and interior trim. These are but a few of the examples that can be cited.

The most common apparatus used today to perform such laminations in a continuous manner are machines using conductive heat which is transferred from impervious moving belts that are clamped against the opposite sides of the layered composite. The belts are tightly woven and coated with a synthetic resin such as Teflon®. The belts pass over or under heated channels, or past a radiant heater, before contacting the workpiece. The belts must be heated to above the activation temperature of the adhesive, e.g., in the range of 16.6° to 33.3°C (30 to 60 Fahrenheit degrees) higher. Care must be exercised in choosing the adhesive, lest its activation temperature be above the point at which the sheet material would begin to degrade. A good example is fabrics made of polypropylene. These normally are quite susceptible to heat and will begin to shrink at temperatures as low as 93.3°C (200° F). Suitable fabric adhesives that will set at lower temperatures are generally solvent-containing liquids. These often release unhealthy or otherwise harmful vapors when curing. It would be desirable if there were a machine for performing such laminations which would permit the use of a normally solid adhesive instead. Solid adhesives are easier to apply in a uniform layer, and they result in less run-off and waste. Also, solid adhesives normally do not emit harmful or dangerous fumes when they cure. With the conductive laminators currently being used, solid adhesives generally can be used only when laminating sheet materials that have relatively high degradation temperatures.

We are aware that in the clothing industry it was common many years ago to use steam fusing machines to laminate interlining fabric, e.g., buckram or crinoline, to suiting fabric. These machines used saturated steam at temperatures in the range of 143.3° - 171.1°C (290-340°F). The steam was ejected through the holes in a perforated steam plate pressed against the interlining ply. The process was slow and discontinuous, however, and has largely been replaced by dry laminators using conductive or radiant heat.

The degradation of fabric that can occur when using dry laminators includes shrinkage, color migration, and shining. Also, if the fabric has a nap, there is a danger of crushing the nap if too high a platen temperature is used.

The normal steam pressures used in industry are less than 7.9 bar (100 psig). Higher pressures require more sophisticated and expensive piping, fittings, and equipment to be used safely. Using the superheated steam laminator of the present invention, high temperatures necessary for many laminations can be achieved without having to handle the high pressures required when working with saturated steam at those temperatures.
US-A-869 895 discloses an apparatus comprising a heated table, means for advancing material to be laminated along the table, a plurality of rollers to compress the material between them and the table, and means admitting steam to the interior of the rollers and the table. A belt having perforations is absorbent, prewetted, and passes the heated table and heated rollers in order to release moisture into the material.

The method of the present invention laminates two or more sheets of material together according to claim 1.

Dry saturated steam can be used in the present method if the steam-permeable sheet material is relatively thin. The steam is superheated, however, and is at a pressure in the range of 3.8 to 7.2 bar (40 to 90 psig), most preferably in the range of 6.2 to 6.9 bar (75 to 85 pounds per square inch gauge = psig). It may, for example, have a temperature at least 27.7°C (50 Fahrenheit degrees) above the saturation temperature corresponding to its pressure. Most preferably the steam will have a temperature in the range of 55.5° to 166.6°C (100 to 300 Fahrenheit degrees) above the saturation temperature corresponding to its pressure. Thus, for instance, the saturation temperature of 6.5 bar (80 psig) steam is approximately 162.8°C (325° F). In the present process it is preferred that 6.5 bar (80 psig) steam be heated to at least 190.6°C (375° F); ideally in the range of 218.3° to 329.4°C (425 to 625° F).

It also is preferred that the present process be run in a continuous manner. The steaming step can be run continuously by drawing the composite of the two sheets and intermediate adhesive between a pair of moving, opposed, open mesh belts and through a series of jets of the superheated steam. The steam jets should be directed substantially perpendicularly to the plane of the belts. The compressing step can be conducted continuously by withdrawing the heated composite from the open mesh belts and passing it through a pair of pressure rollers. When conducted in this manner, production times can be reduced substantially.

A host of different types of sheet materials can be laminated using the process of the present invention. At least one of the sheets must be steam-permeable. Examples of suitable steam-permeable sheet materials are woven fabrics, knit fabrics, non-woven fibrous mats and fabrics (e.g., needle-punched fabrics), open-cell foam, and porous particleboard. The second sheet need not be steam-permeable. In addition to the materials just mentioned, plastic film and steam-impervious cellulosic webs (e.g., paperboard) can be used as the second sheet. The sheets can be continuous or cut parts. All types of fibers can be used in the fabrics, including wool, polyester, cotton, polypropylene, fiberglass, rayon, and polyacrylate.

The adhesive used can be either heat-activatable or moisture-curing, and it can be thermoplastic or thermosettable. Solid adhesives often are preferred. These can be applied to one of the sheets in particulate form or can be interleaved between the sheets in the form of films or webs. Solid, moisture-curing adhesives can be applied in molten form immediately ahead of the laminator.

If a heat-activatable adhesive is used, it preferably will have an activation temperature somewhere in the range of 60.0° to 176.7°C (140 to 350° F). Among the suitable heat activatable adhesives are polyamide adhesives, polyester adhesives, and vinylic polymer adhesives, e.g., the vinyl acetate polymers such as polyvinyl acetate and ethylene-vinyl acetate copolymers. Thermoplastic polyamide and polyester adhesives often are preferred for laminating foam or interlining to fabric. These adhesives usually have a melt point somewhere in the range of 87.8° to 176.7°C (190 to 350° F). For laminating foam to fabric a melt point in the range of 104.4° to 110.0°C (220 to 230° F). often is preferred. For fusing interlining to suiting fabric an adhesive melting somewhere in the range of 115.6° to 132.2°C (240 to 270° F). usually is preferred.

When laminating interlining to shoe upper material, a thermoplastic polymer of vinyl acetate, preferably an ethylene-vinyl acetate copolymer, is advantageously used as the adhesive. It may have a melt point in the range of 60.0° to 87.8°C (140 to 190° F)., preferably in the range of 76.7°C to 87.8°C (170 to 190° F).

Polyurethanes are the preferred moisture curing adhesives. These are normally solids that are solvent-free. Prior to heating they have about the same consistency as paraffin wax. They usually have a melting point in the range of 65.6° to 93.3°C (150 to 200° F). They can be applied to the sheet material by heating them to melting and then either coating them on the material, using a gravure roll or a slot die, or spraying them on the material. When cured in ambient air, polyurethane adhesives usually require several minutes of tack time before the laminated material can be subjected to further handling or processing. Using the method of the present invention, the polyurethane-adhered laminates require much shorter tack times. We have laminated 12.7 mm (1/2 inch) thick open-cell foam to a woven polyester cloth, for example, using Bostik No. 9601 polyurethane, and were able to begin cutting and sewing operations only 10 seconds after the compression step. The advertised tack time for this thermosettable adhesive is 3 minutes, when allowed to cure at room temperature in the open air. The foam we used was a thermoplastic, polyether-based polyurethane. We have experienced the same success when laminating this foam to a cloth-backed vinyl fabric, using the Bostik No. 9601 adhesive.

The use of the steam in the present method supplies some of the moisture needed to cure the polyurethane and accelerates the curing by heating the adhesive. The conditions of the steam ejection need to be balanced, in terms of temperature and duration, to provide enough moisture to cross-link the polyurethane, but not so much of an excess that the laminate comes out wet. Process times in the laminator are generally shorter when using the moisture-curing adhesives than when using the heat activatable ones. This allows for more production per machine, with less energy consumption per laminated article.

An advantage of the present lamination method is that it does not require an adhesive that is activated below the degradation temperature of the sheet materials. Thus, for example, a polypropylene fabric which shrinks at 93.3°C (200° F). can be safely laminated to a 9.5 to 12.7 mm (3/8 to 1/2 inch) thick sheet of open-cell foam using a thermoplastic adhesive having a melt point of 104.4°C (220° F).

The method of this invention may be used to laminate more than two sheets of material together, if desired. In the shoe industry, for example, a laminate of interlining fabric, thin foam, and upper material often is used. The interlining is usually a thin cloth, such as a woven cotton or cotton and polyester blend. The foam normally is a polyurethane (polyether-based or polyester-based) and is approximately 1.6 mm (1/16th inch)thick. The upper material may be vinyl or leather, with or without a backing. The upper material is the most heat-sensitive of the three and may have a degradation temperature of about 87.8°C (190° F). To fuse together such a three-layer composite on a dry laminator would require using temperatures in the range of 27.7° to 33.3°C (50 to 60 Fahrenheit degrees) higher than the activation temperature of the adhesive, which makes it rather impractical to use hot melt adhesives.

If all layers of the sheet material are air-permeable, it can be advantageous to apply a vacuum to the side of the composite opposite where the steam enters. This helps pull the steam through the first sheet of material, into the adhesive layer. Also, it helps prevent condensation on the composite article, which may cause spotting.

The apparatus for practicing the process of the present invention comprises the following elements:
a) a pair of opposed, open mesh, endless conveyor belts, disposed so as to permit a composite of two sheets of material and an intermediate layer of adhesive to be clamped between the belts,
b) means for revolving the belts in opposite directions so as to convey the composite between them,
c) a perforated platen mounted inside one of the belts, the holes of the platen facing the belt in the zone where the two belts clamp against the composite,
d) means for ejecting steam from the platen with enough force to pass through the adjacent belt,
e) means for cooling the second belt on its return to the head of the zone where it clamps against the composite, and
f) a pair of pressure rollers mounted adjacent the end of the zone where the belts clamp against the composite, adapted to receive and compress the composite after it has left said zone.

The platen preferably is made of cast aluminum. Behind its perforated face is an enclosed steam chamber. This chamber preferably will be supplied with superheated steam. It also is preferred that there be separate means, apart from the superheated steam, for heating the platen. Electrical resistance heaters can be used, for example. These advantageously are mounted on the outside of the platen.

Substantially the entire contact surface of the platen should be perforated. The holes should be relatively small, e.g., having a diameter in the range of 0.76 to 2.03 mm (0.030 to 0.080 inch), so that the steam jets will be narrow. The platen holes should be spaced rather closely together -- the smaller the holes, the closer the spacing. Ideally, the holes should not be more than 19.05 mm (0.750 inch) apart.

The perforated surface of the platen preferably is slightly bowed, or arched, and normally is pressed outwardly against the adjacent belt, so as to provide a smooth path and a relatively even clamping pressure between the belts.

Each conveyor belt has an open mesh, or weave, so as to be air-permeable. The belt adjacent the steam platen preferably presents as small a pressure drop across the steam path as possible. Preferably this belt will have an open area constituting at least about 30 percent of the total surface area of the belt, e.g., in the range of 30 to 60 percent. The other belt can be less open, e.g., having an open area of only about 5 to 20 percent. Both belts should be heat resistant, for example having a degradation temperature above 204.4°C (400° F). Belts made of fiberglass or Nomex® aramid fibers, coated with Teflon polytetrafluorethylene resin, are ideal.

The apparatus may preferably be equipped with heater means positioned along the return path of the first belt, so as to re-heat the belt before it comes back to the head of the clamping zone.

It is also preferred that the apparatus include vacuum means mounted inside the second belt (i.e., not the belt encircling the platen) in such a way as to pull air and steam through both belts along their clamping zone. The means for cooling the second conveyor belt during its return to the head of the clamping zone need not be elaborate. Simply exposing the belt to the open air will suffice.

For a fuller understanding of the method and apparatus of the present invention, reference is made to the drawings accompanying this specification. These drawings depict a preferred embodiment of the apparatus and show how it works. Referring to the drawings:
Figure 1 is an isometric view of the apparatus (partially cut away) but without its frame.
Figure 2 is an enlarged, isometric view of a portion of the clamping zone and adjacent steam platens, showing them being used to heat a composite of fabric, adhesive, and cushion foam.

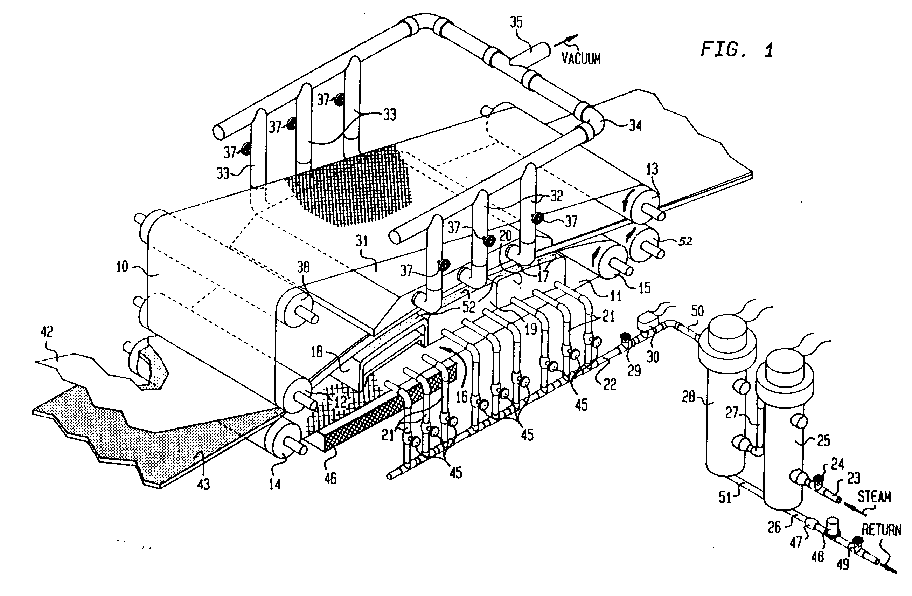

As shown in Figure 1, endless conveyor belts 10 and 11 are mounted in opposition to one another. Belt 11 is driven clockwise by roller 15, while belt 10 is driven counterclockwise by roller 13. Both belts are made of a Teflon-coated, open weave fiberglass. Belt 10 has a closer weave, with an open area of only about 15 percent. Belt 11 has an open area of about 50 percent. Belt 10 runs around two idler rollers 12 and 38; belt 11 runs around one idler roller 14.

Pressing up against the underside of belt 11 is a slightly arched platen assembly 16, the entire contact surface 52 of which is perforated with holes 17, having a diameter of 1.65 mm (0.065 inch) and spaced 15.9 mm (0.625 inch) apart. Platen assembly 16 consists of three enclosed steam compartments 18, 19, and 20. (In Figure 1 steam compartment 18 is shown without its end cover, for purposes of clarity.) Each of these compartments is supplied with superheated steam by three branch lines 21, coming from manifold line 22. Each supply line 21 is equipped with a manual flow control valve 45, which allows the steam to be balanced across the compartment. Each compartment 18, 19, and 20 is connected to a drain line (not shown) for removal of condensate.

Saturated plant steam enters the system via line 23, through manual control valve 24, into first pressure vessels 25. The saturated steam in line 23 may have a pressure of, say, in the range of 3.8 to 7.2 bar (40 to 90 psig), which gives it a temperature in the range of 140.6° to 165.6°C (285 to 330° F). Usually saturated steam having a pressure in the range of 6.2 to 6.9 bar (75 to 85 psig) will be used. Inside vessel 25 the steam is heated further by electric coils (not shown) to a temperature in the range of, say, 190.6° to 204.4°C (375 to 400° F). The pressure remains relatively constant, however. Condensate is drained from tank 25 via line 26, which is sloped downwards. Line 26 is equipped with a particle strainer 47, a 9.6 bar (125 psig) steam trap 48, and a check valve 49.

From vessel 25 the steam flows through line 27 over into pressure vessel 28, wherein it is heated still further, for example to the range of 237.8° to 246.1°C (460 to 475° F). Condensate from vessel 28 passes through drain line 51, which connects (not shown) with condensate line 26. Again, the pressure is maintained relatively steady. From vessel 28 the superheated steam exits via line 50, through manual valve 29 and solenoid valve 30, into manifold line 22.

Mounted inside upper conveyor belt 10 is slightly arched vacuum hood 31. Tubes 32 and 33 connect hood 31 with U-shaped manifold 34. Each of the tubes 32 and 33 is equipped with a manual control valve 37. Manifold 34, in turn, is supplied by vacuum line 35, which is controlled by a solenoid valve (not shown). A vacuum in the range of 0.28 to 1.70m³ (10 to 60 cubic feet) per minute, for each 929 cm² (square foot) of platen surface, is preferred.

As seen in Figure 1, upper conveyor belt 10 passes through ambient air from the time it is taken up by roller 13 until it once again begins its passage over platen 16, which serves to cool the belt. Bottom conveyor belt 11, on the other hand, passes over radiant heater 46 just before it reaches roller 14. Heater 46 preferably pre-heats belt 11 to the range of 107.2° to 121.1°C (225 to 250° F) to help prevent condensation from forming when first contact with the steam is made. Because of these features, this apparatus may be used to laminate a fairly heat-sensitive material to one that is less heat-sensitive, provided the latter is porous to steam. A velour fabric, for example, can be laminated to open-cell polyurethane foam, using a powdered adhesive having a melt point of 110°C (230° F), without the face temperature of the velour ever reaching higher than 87.8°C (190° F).

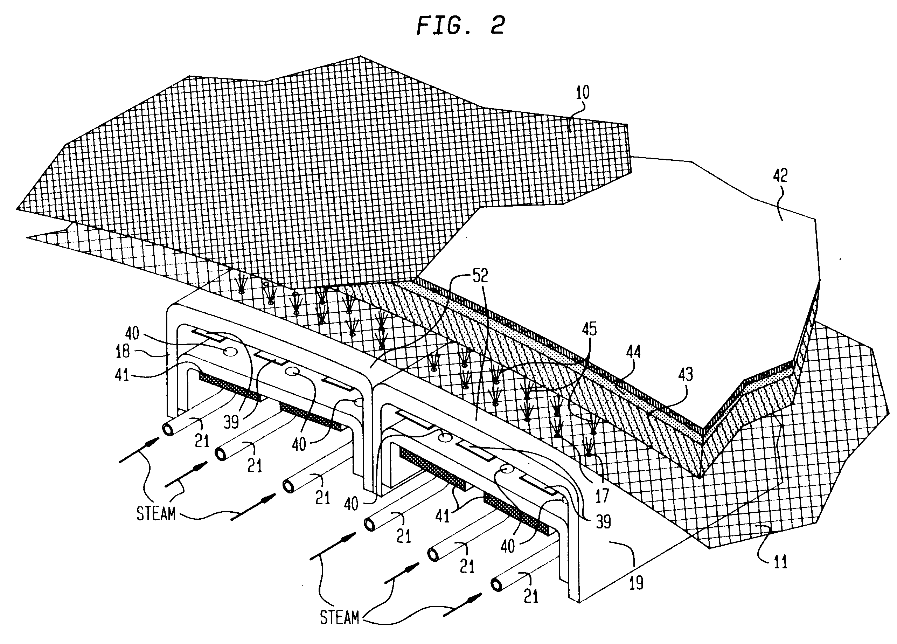

Figure 2 shows steam compartments 18 and 19 with the end covers removed. Positioned inside each compartment is a baffle 39, which is mounted above the opening 40 of the steam line and which serves to disperse the inrushing superheated steam throughout the compartment. Bolted to the underside of compartments 18 and 19 are electrical heater elements 41.

In Figure 2 the equipment is shown being used to laminate a woven polyester and spandex fabric 42 to 12.7 mm (1/2 inch) thick sheet of open-cell, thermoplastic foam 43, made of polyether-based polyurethane. Between fabric 42 and foam 43 is a layer of powdered polyamide adhesive 44 having a melt point of 104.4°C (220° F). The adhesive 44 is sprinkled onto the sheet of foam 43 at a preceding station (not shown) at a uniform application rate of 19.85g (0.07 oz.) per 0.84 m² (square yard). Belts 10 and 11 convey the layered composite past steam jets 45 at a slow enough speed that all of the adhesive 44 is melted by the time the composite is removed from the belts. Thus, for example, the time it takes for the composite to travel from the first row of steam jets to the last may be about 15 seconds. The steam entering compartments 18 and 19 is at a pressure of 6.5 bar (80 psig) and a temperature of 260.0°C (500° F). The output of electric heaters 41 is set to warm the interior of compartments 18 and 19 to approximately 121.1°C (250° F). prior to the admission of the steam. Due to its being circulated in the open air on its return path, top belt 10 reaches a maximum temperature of only 79.4°C (175° F).

After running off the end of lower belt 11, the composite is passed between upper drive roller 13 and nip roller 52. Those two rollers are set to apply a pressure to the composite of 4.1 bar (60 lbs. per square inch). The source of this pressure is two 63.5 mm (2 1/2 inch) diameter air cylinders (not shown) that press down on drive roller 13.

## Claims

1. A method of laminating two sheets of material (43,42) together, using a heat-activatable or moisture-curing adhesive (44), wherein at least one of the sheets (43,42) is steam-permeable, the method comprising the following steps:
a) forming a layered composite (42-44) of the two sheets of material (43,42) with a layer (44) of a heat-activatable or moisture-curing adhesive (44) in between, the first sheet (43) being steam-permeable;
characterized by
b) supplying superheated steam at a pressure in the range of 3.8 to 7.2 bar (40 to 90 pounds per square inch gauge) and at a temperature in the range of 27.7° to 166.6°C (50 to 300 Fahrenheit degrees) above the saturation temperature;
c) passing the superheated steam through the first sheet of material (43) into the adhesive layer (44), the temperature of the steam being high enough to activate the adhesive, and continuing such steam flow until substantially all of the adhesive (44) has been activated;
d) compressing the steamed composite (42-44) before the adhesive has set;
e) releasing the pressure on the composite (42-44); and
f) allowing the adhesive (44) to fully cure.

2. The method of claim 1 wherein, in step (c), the steam has a pressure in the range of 3.8 to 7.2 bar (40 to 90 pounds per square inch gauge) and a temperature of at least 27.7°C (50 Fahrenheit degrees) above the saturation temperature corresponding to its pressure.

3. The method of claims 1 or 2 wherein the steam has a temperature in the range of 55.5° to 166.6°C (100 to 300 Fahrenheit degrees) above the saturation temperature corresponding to its pressure.

4. The method of claims 2 or 3 wherein the steam has a pressure in the range of 6.2 to 6.9 bar (75 to 85 pounds per square inch gauge).

5. The method of claims 1 to 4 wherein step (c) is performed in a continuous manner by drawing the composite between a pair of moving, opposed, open mesh belts (17,10), through a series of jets (45) of the superheated steam disposed substantially perpendicularly to the plane of the belts (11,10).

6. The method of claims 1 to 5 wherein, in step (d), the heated composite (42-44) is compressed in a continuous manner by passing the heated composite through a pair of pressure rollers (13,52).

7. The method of claims 1 to 6 wherein the second sheet of material (42) is also steam-permeable and, in step (c), a vacuum is applied to the open mesh belt (10) adjacent the second sheet (42), so as to help pull the steam through the first sheet of material (42).

8. The method of claims 1 to 7 wherein the first sheet of material (43) is an open-cell polyurethane foam and the second sheet of material (42) is a decorative fabric.

9. A continuous method of laminating two sheets of material (43,42) together, using a heat-activatable adhesive (44), wherein at least one (43) of the sheets (43,42) is steam-permeable, the method comprising the following steps:
a) forming a layered composite (42-44) of first and second sheets of material (43,42) with a layer (44) of heat-activatable or moisture-curing adhesive (44) in between, the first sheet (43) being steam-permeable;
characterized by
b) drawing the composite (42-44) between a pair of moving, opposed, open mesh belts (11,10) through a series of jets (45) of steam disposed substantially perpendicularly to the plane of the composite, the temperature of the steam being high enough to activate the adhesive (44), said drawing being conducted at a slow enough pace that the steam activates substantially all of the adhesive (44);
c) before the adhesive (44) has set, passing the steamed composite (42-44) through a pair of pressure rollers(13,52) so as to compress the composite (42-44);
d) withdrawing the composite from the pressure rollers (13,52) so as to release the pressure on it; and
e) allowing the adhesive (44) to fully cure.

10. The method of claims 1 to 9 wherein the adhesive (44) is a thermoplastic adhesive having a melt point somewhere in the range of 60.0° to 176.7°C (140 to 350° F).

11. The method of claims 1 to 10 wherein the adhesive (44) is a polyurethane.

12. The method of claims 1 to 11 wherein the first sheet of material (43) is selected from the group consisting of woven fabrics, knit fabrics, non-woven fibrous mats and fabrics, open-cell foam, and porous particleboard.

13. The method of claims 1 to 12 wherein the second sheet of material (42) is selected from the group consisting of plastic film, cellulosic webs, woven fabrics, knit fabrics, non-woven fibrous mats and fabrics, open-cell foam, and porous particleboard.

14. The method of claims 1 to 13 wherein the adhesive (44) comprises a synthetic resin selected from the group consisting of polyamides, polyester, and vinylic polymers.

15. The method of claims 9 to 14 wherein the second sheet of material (42) is also steam-permeable and, in step (b), a vacuum is applied to the open mesh belt adjacent the second sheet (42), so as to help pull the steam through the first sheet of material (43).

16. The method of claims 9 to 15 wherein the first sheet of material (43) is an interlining fabric and the second sheet of material (42) is a suiting fabric.

17. An apparatus for continuously laminating two sheets of material (42,43) together, using a heat-activatable or moisture-curing adhesive (44), wherein at least one of the sheets (42,43) is steam-permeable, characterized by:
a) a pair of opposed, open mesh, endless conveyor belts (11,10) disposed so as to permit a composite of two sheets of material (42,43) and an intermediate layer of adhesive (44) to be clamped therebetween, each belt (11,10) having an inside and an outside, the outside being the surface which touches the composite (42-44) when it is clamped between the belts (11,10);
b) means (12,13,38,14,15) for revolving the belts (11,10) in opposite directions so as to convey the composite (42-44) between them;
c) a platen (16) mounted adjacent the inside of the first (11) of said belts (11,10), said platen (16) having an enclosed chamber (18,19,20) with a perforated surface (52) facing the adjacent belt (11) in the zone where the two belts (11,10) clamp against the composite (42-44);
d) means (21-30,39-41,45,50) for ejecting steam through the perforations (17) in the platen (16) with enough force to pass through the adjacent belt (11);
e) means (31-37) for cooling the second (10) of said belts (11,10) on its return to the head of the clamping zone; and
f) means (13,52) for compressing the composite (42-44) after it leaves the steam ejection zone.

18. The apparatus of claim 17 wherein the means (13,52) for compressing the composite (42-44) comprises a pair of pressure rollers (13,52) mounted adjacent the end of the first conveyor belt (11), adapted to receive and compress the composite (42-44) after the composite (42-44) has run off the end of said belt (11).

19. The apparatus of claims 17 or 18 including means (23-28,50) for supplying superheated steam to the enclosed chamber (18-20) of said platen (16).

20. The apparatus of claims 17 to 19 including means apart from the superheated steam for heating said platen (16).

21. The apparatus of claim 20 wherein said heating means comprises at least one electrical resistance heater element attached to the platen (16).

22. The apparatus of claim 21 wherein said heater element is mounted on the outside of the platen (16).

23. The apparatus of claims 17 to 22 wherein the first belt (11) has an open area constituting in the range of 30 to 60 percent of the total surface area of the belt (11) and the second belt (10) has an open area constituting in the range of 5 to 20 percent of the entire surface area of the belt (10).

24. The apparatus of claims 17 to 23 wherein each of the belts (11,10) is made of a fabric having a degradation temperature above 204.4°C (400° F).

25. The apparatus of claims 17 to 24 wherein the holes (17) in the platen (16) have a diameter in the range of 0.76 to 2.03 mm (0.030 to 0.080 inch) and are spaced no more than 19.05 mm (0.750 inch) apart.

26. The apparatus of claims 17 to 25 wherein the platen (16) is made of cast aluminum.

27. The apparatus of claims 17 to 26 additionally including vacuum means (31-37) mounted inside the second belt (10) in such a location as to be capable of pulling air and steam through both belts (11,10) along the clamping zone.

28. The apparatus of claims 19 to 27 wherein the steam supply means (23-28,50) is operable to supply steam to the enclosed chamber (18-20) of the platen (16) at a pressure in the range of 3.8 to 7.2 bar (40 to 90 psig) and a temperature at least about 27.7°C (50 Fahrenheit degrees) above the saturation temperature corresponding to its pressure.

29. The apparatus of claims 17 to 28 wherein at least the outside surface of the first belt (11) is composed of a polytetrafluoroethylene resin.

30. The apparatus of claims 19 to 29 wherein the steam supply means (23-28,50) includes a vessel equipped with steam inlet means (23-24,27), an internal electric coil heater, and steam outlet means (27,50).

31. The apparatus of claims 19 to 30 wherein the steam supply means (23-28,50) includes at least two vessels (25,28) connected in series, each vessel (25,28) being equipped with steam inlet means (23,24,27), an internal electric coil heater, and steam outlet means (27,50).

32. The apparatus of claims 17 to 31 wherein the means (31-37) for cooling the second belt (10) comprises means for exposing the belt to open air.

33. The apparatus of claims 27 to 32 wherein the vacuum means (31-37) is operable to pull in the range of 0.28 to 1.70 m³ (10 to 60 cubic feet) of air per minute, for each square foot of the platen surface, and the conveyor belts (11,10) are horizontally disposed, with the first belt (11) being on the bottom.

34. The apparatus of claims 17 to 33 wherein the platen (16) is arched and the convex side thereof presses against the inside of the first belt (11).

35. The apparatus of claims 19 to 34 wherein the steam supply means (23-28,50) is operable to supply steam to the enclosed chamber (18-20) of the platen (16) at a pressure in the range of 6.2 to 6.9 bar (75 to 85 psig) and a temperature in the range of 55.5° to 166.6°C (100 to 300 Fahrenheit degrees) above the saturation temperature corresponding to its pressure.

36. The apparatus of claims 17 to 35 additionally including means (46) for re-heating the first belt (11) during its return to the head of the clamping zone.

## Patentansprüche

1. Verfahren zum Zusammenlaminieren von zwei Materialschichten (43, 42) mit einem wärmeaktivierbaren oder unter Feuchtigkeit härtenden Kleber (44), wobei mindestens eine der Schichten (43, 42) dampfdurchlässig ist und das Verfahren die folgenden Schritte aufweist:
a) Ausbilden eines Verbundwerkstoffs (42-44) mit den zwei Materialschichten (43, 42) und einer Schicht (44) von wärmeaktivierbarem oder unter Feuchtigkeit härtendem Kleber (44) dazwischen, wobei die erste Schicht (43) dampfdurchlässig ist,
**gekennzeichnet durch**
b) Bereitstellen von Heißdampf unter einem Druck im Bereich von 3,8 bis 7,2 bar (40 bis 90 psig) und mit einer Temperatur im Bereich von 27,7 bis 166,6°C (50 bis 300°F) über der Sättigungstemperatur,
c) Durchleiten des Heißdampfes durch die erste Materialschicht (43) in die Kleberschicht (44), wobei die Dampftemperatur hoch genug ist, um den Kleber zu aktivieren, und Fortsetzen eines derartigen Dampfflusses, bis im wesentlichen der gesamte Kleber (44) aktiviert worden ist,
d) Drücken des bedampften Verbundes (42-44) vor dem Aushärten des Klebers,
e) Ablassen des Drucks auf dem Verbund (42-44) und
f) vollständiges Aushärtenlassen des Klebers (44).

2. Verfahren nach Anspruch 1, wobei im Schritt (c) der Dampf unter einem Druck im Bereich von 3,8 bis 7,2 bar (40 bis 90 psig) steht und eine Temperatur von mindestens 27,7°C (50°F) über der dem Druck entsprechenden Sättigungstemperatur hat.

3. Verfahren nach Anspruch 1 oder 2, wobei der Dampf eine Temperatur im Bereich von 55,5 bis 166,6°C (100 bis 300°F) über der dem Druck entsprechenden Sättigungstemperatur hat.

4. Verfahren nach Anspruch 2 oder 3, wobei der Dampf unter einem Druck im Bereich von 6,2 bis 6,9 bar (75 bis 85 psig) steht.

5. Verfahren nach einem der Ansprüche 1 bis 4, wobei der Schritt (c) kontinuierlich durch Führen des Verbundes zwischen einem Paar von sich bewegenden, gegenüberliegenden, offenen Maschenbändern (11, 10) durch eine Reihe von Strahlen (45) des Heißdampfes durchgeführt wird, die im wesentlichen senkrecht zu der Ebene der Bänder (11, 10) gerichtet sind.

6. Verfahren nach einem der Ansprüche 1 bis 5, wobei im Schritt (d) der erwärmte Verbund (42-44) durch Führen des erwärmten Verbundes durch ein Paar Druckrollen (13, 52) kontinuierlich gedrückt wird.

7. Verfahren nach einem der Ansprüche 1 bis 6, wobei die zweite Materialschicht (42) auch dampfdurchlässig ist und im Schritt (c) ein Unterdruck an dem offenen Maschenband (10) neben der zweiten Schicht (42) aufgebracht wird, um den Dampf durch die erste Materialschicht (42) zu ziehen.

8. Verfahren nach einem der Ansprüche 1 bis 7, wobei die erste Materialschicht (43) ein offenzelliger Polyurethanschaum und die zweite Materialschicht (42) ein Dekorgewebe ist.

9. Kontinuierliches Verfahren zum Zusammenlaminieren von zwei Materialschichten (43, 42) mit einem wärmeaktivierbaren Kleber (44), wobei mindestens eine (43) der Schichten (43, 42) dampfdurchlässig ist und das Verfahren die folgenden Schritte aufweist:
a) Ausbilden eines Verbundwerkstoffes (42-44) aus der ersten und zweiten Materialschicht (43, 42) mit einer Schicht (44) von wärmeaktivierbarem oder unter Feuchtigkeit härtendem Kleber (44) dazwischen, wobei die erste Schicht (43) dampfdurchlässig ist,
**gekennzeichnet durch**
b) Führen des Verbundes (42-44) zwischen ein Paar von sich bewegenden, gegenüberliegenden, offenen Maschenbändern (11, 10) durch eine Reihe von Strahlen (45) von Dampf, die im wesentlichen senkrecht zu der Ebene des Verbundes gerichtet sind, wobei die Dampftemperatur hoch genug ist, den Kleber (44) zu aktivieren und das Führen langsam genug durchgeführt wird, daß der Dampf im wesentlichen den gesamten Kleber (44) aktiviert.
c) Führen des bedampften Verbundes (42-44) vor dem Aushärten des Klebers (44) durch ein Paar Druckrollen (13, 52), um den Verbund (42-44) zu drücken,
d) Herausziehen des Verbundes aus den Druckrollen (13, 52), um den Druck darauf abzulassen, und
e) völliges Aushärtenlassen des Klebers (44).

10. Verfahren nach einem der Ansprüche 1 bis 9, wobei der Kleber (44) ein thermoplastischer Kleber mit einem Schmelzpunkt im Bereich von 60,0 bis 176,7°C (140 bis 350°F) besitzt.

11. Verfahren nach einem der Ansprüche 1 bis 10, wobei der Kleber (44) ein Polyurethan ist.

12. Verfahren nach einem der Ansprüche 1 bis 11, wobei die erste Materialschicht (43) aus einer Gruppe umfassend Gewebe, Maschenwaren, nicht-gewebte Fibermatten und -gewebe, offenzelligen Schaum und poröse Spanplatte ausgewählt wird.

13. Verfahren nach einem der Ansprüche 1 bis 12, wobei die zweite Materialschicht (42) ausgewählt wird aus einer Gruppe von Kunststoffilm, Cellulosegeweben, Geweben, Maschenwaren, nicht-gewebten Fibermatten und -geweben, offenzelligem Schaum und poröser Spanplatte.

14. Verfahren nach einem der Ansprüche 1 bis 13, wobei der Kleber (44) ein synthetisches Harz aufweist, ausgewählt aus einer Gruppe von Polyamiden, Polyestern und Vinylpolymeren.

15. Verfahren nach einem der Ansprüche 9 bis 14, wobei die zweite Materialschicht (42) auch dampfdurchlässig ist und im Schritt (b) ein Unterdruck an dem offenen Maschenband neben der zweiten Schicht (42) angelegt wird, um den Dampf durch die erste Materialschicht (43) zu ziehen.

16. Verfahren nach einem der Ansprüche 9 bis 15, wobei die erste Materialschicht (43) ein Zwischengewebe und die zweite Materialschicht (42) ein Auskleidegewebe ist.

17. Vorrichtung zum kontinuierlichen Zusammenlaminieren von zwei Materialschichten (42, 43) mit einem wärmeaktivierbaren oder unter Feuchtigkeit härtenden Kleber (44), wobei mindestens eine der Schichten (42, 43) dampfdurchlässig ist, **gekennzeichnet durch**
a) ein Paar von gegenüberliegenden, offenmaschigen, endlosen Transportbändern (11, 10), die derart angeordnet sind, daß sie einen Verbund von zwei Materialschichten (42, 43) und einer Kleberzwischenschicht (44) dazwischen zusammenzubringen, wobei jedes Band (11, 10) eine Innen- und eine Außenseite hat und die Außenseite die Fläche ist, die den Verbund (42-44) berührt, wenn er zwischen die Bänder (11, 10) gebracht wird,
b) eine Einrichtung (12, 13, 38, 14, 15) zum Drehen der Bänder (11, 10) in entgegengesetzte Richtungen, um den Verbund (42-44) dazwischen zu transportieren,
c) eine Platte (16), die dem Inneren des ersten Bandes (11) der Bänder (11, 10) benachbart angeordnet ist, wobei die Platte (16) eine geschlossene Kammer (18, 19, 20) mit einer perforierten Fläche (52) aufweist, die dem benachbarten Band (11) in dem Bereich gegenübersteht, wo die zwei Bänder (11, 10) gegen den Verbund (42-44) drücken,
d) eine Einrichtung (21-30, 39-41, 45, 50) zum Ausstoßen von Dampf durch die Perforationen (17) in der Platte (16) mit genug Kraft, um den Dampf durch das benachbarte Band (11) zu drücken,
e) eine Einrichtung (31-37) zum Kühlen des zweiten Bandes (10) der Bänder (11, 10) beim Rückkehren zum vorderen Druckbereich und
f) eine Einrichtung (13, 52) zum Drücken des Verbundes (42-44), nachdem er den Dampfausstoßbereich verläßt.

18. Vorrichtung nach Anspruch 17, wobei die Einrichtung (13, 52) zum Drücken des Verbundes (42-44) ein Paar von Druckrollen (13, 52) aufweist, die dem Ende des ersten Transportbandes (11) benachbart angeordnet und geeignet sind, den Verbund (42-44) aufzunehmen und zu drücken, nachdem der Verbund (42-44) das Ende des Bandes (11) verlassen hat.

19. Vorrichtung nach Anspruch 17 oder 18 mit einer Einrichtung (23-28, 50) zum Bereitstellen von Heißdampf an die geschlossene Kammer (18-20) der Platte (16).

20. Vorrichtung nach einem der Ansprüche 17 bis 19, wobei neben dem Heißdampf eine Einrichtung zum Wärmen der Platte (16) vorgesehen ist.

21. Vorrichtung nach Anspruch 20, wobei die Wärmeinrichtung mindestens ein elektrisches Widerstandsheizelement aufweist, das an der Platte (16) angebracht ist.

22. Vorrichtung nach Anspruch 21, wobei das Heizelement an der Außenseite der Platte (16) angebracht ist.

23. Vorrichtung nach einem der Ansprüche 17 bis 22, wobei das erste Band (11) einen offenen Bereich hat, der etwa 30 bis 60 % der Gesamtfläche des Bandes (11) bildet, und das zweite Band (10) einen offenen Bereich hat, der etwa 5 bis 20 % der Gesamtfläche des Bandes (10) bildet.

24. Vorrichtung nach einem der Ansprüche 17 bis 23, wobei jedes der Bänder (11, 10) aus einem Gewebe mit einer Degradationstemperatur über 204,4°C (400°F) hergestellt ist.

25. Vorrichtung nach einem der Ansprüche 17 bis 24, wobei die Löcher (17) in der Platte (16) einen Durchmesser im Bereich von 0,76 bis 2,03 mm (0,030 bis 0,080 inch) aufweisen und nicht mehr als 19,05 mm (0,750 inch) voneinander beabstandet sind.

26. Vorrichtung nach einem der Ansprüche 17 bis 25, wobei die Platte (16) aus Gußaluminium hergestellt ist.

27. Vorrichtung nach einem der Ansprüche 17 bis 26, die zusätzlich eine Unterdruckeinrichtung (31-37) aufweist, die im Inneren des zweiten Bandes (10) derart angeordnet ist, daß Luft und Dampf durch beide Bänder (11, 10) entlang des Druckbereichs gezogen werden können.

28. Vorrichtung nach einem der Ansprüche 19 bis 27, wobei die Dampfbereitstelleinrichtung (23-28, 50) geeignet ist, Dampf an die geschlossene Kammer (18-20) der Platte (16) mit einem Druck im Bereich von 3,8 bis 7,2 bar (40 bis 90 psig) und mit einer Temperatur von mindestens über 27,7°C (50°F) über der dem Druck entsprechenden Sättigungstemperatur bereitzustellen.

29. Vorrichtung nach einem der Ansprüche 17 bis 28, wobei mindestens die Außenfläche des ersten Bandes (11) aus Polytetrafluorethylenharz besteht.

30. Vorrichtung nach einem der Ansprüche 19 bis 29, wobei die Dampfbereitstelleinrichtung (23-28, 50) einen Kessel mit einer Dampfeinlaßeinrichtung (23, 24, 27), einem inneren Elektrowendelheizer und einer Dampfauslaßeinrichtung (27, 50) aufweist.

31. Vorrichtung nach einem der Ansprüche 19 bis 30, wobei die Dampfbereitstelleinrichtung (23-28, 50) mindestens zwei Kessel (25, 28) aufweist, die in Serie miteinander verbunden sind, wobei jeder Kessel (25, 28) eine Dampfeinlaßeinrichtung (23, 24, 27), einen inneren Elektrowendelheizer und eine Dampfauslaßeinrichtung (27, 50) aufweist.

32. Vorrichtung nach einem der Ansprüche 17 bis 31, wobei die Einrichtung (31-37) zum Kühlen des zweiten Bandes (10) eine Einrichtung zum Beaufschlagen des Bandes mit Umgebungsluft aufweist.

33. Vorrichtung nach einem der Ansprüche 27 bis 32, wobei die Unterdruckeinrichtung (31-37) geeignet ist, Luft im Bereich von 0,28 bis 1,70 m³ (10 bis 60 Kubikfuß) pro Minute pro 0,093 m² (1 Quadratfuß) der Plattenfläche zu ziehen, und die Transportbänder (11, 10) horizontal mit dem ersten Band (11) am Boden angeordnet sind.

34. Vorrichtung nach einem der Ansprüche 17 bis 33, wobei die Platte (16) gebogen ist und die konvexe Seite gegen das Innere des ersten Bandes (11) drückt.

35. Vorrichtung nach einem der Ansprüche 19 bis 34, wobei die Dampfbereitstelleinrichtung (23-28, 50) geeignet ist, Dampf an die geschlossene Kammer (18-20) der Platte (16) mit einem Druck im Bereich von 6,2 bis 6,9 bar (75 bis 85 psig) und einer Temperatur im Bereich von 55,5 bis 166,6°C (100 bis 300°F) über der dem Druck entsprechenden Sättigungstemperatur bereitzustellen.

36. Vorrichtung nach einem der Ansprüche 17 bis 35, die zusätzlich eine Einrichtung (46) zum Wiederaufwärmen des ersten Bandes (11) während seines Zurücklaufens an den vorderen Druckbereich aufweist.

## Revendications

1. Procédé de collage de deux feuilles (43, 42) d'un matériau l'une à l'autre à l'aide d'un adhésif (44) qui peut être activé par chauffage ou qui durcit sous l'action de l'humidité, dans lequel l'une au moins des feuilles (43, 42) est perméable à la vapeur d'eau, le procédé comprenant les étapes suivantes :
a) la formation d'un matériau composite en couches (42-44) comprenant les deux feuilles (43, 42) avec une couche (44) d'un adhésif (44) qui peut être activé par la chaleur ou qui durcit sous l'action de l'humidité, entre les deux feuilles, la première feuille (43) étant perméable à la vapeur d'eau, et
caractérisé par
b) la transmission de vapeur surchauffée à une pression comprise entre 3,8 et 7,2 bars (40 et 90 livres par pied carré, pression manométrique), à une température supérieure de 27,7 à 166,6 °C (50 à 300 °F) à la température de saturation,
c) le passage de la vapeur d'eau surchauffée à travers la première feuille (43) dans la couche adhésive (44), la température de la vapeur d'eau étant suffisamment élevée pour qu'elle active l'adhésif, et la poursuite de la circulation de la vapeur d'eau jusqu'à ce que tout l'adhésif (44) pratiquement ait été activé,
d) la compression du matériau composite (42-44) traité par la vapeur avant que l'adhésif ne durcisse,
e) la suppression de la pression appliquée au matériau composite (42-44), et
f) le durcissement naturel complet de l'adhésif (44).

2. Procédé selon la revendication 1, dans lequel, dans l'étape (c), la vapeur d'eau a une pression comprise entre 3,8 et 7,2 bars (40 à 90 livres par pied carré, pression manométrique) et une température supérieure d'au moins 27,7 °C (50 °F) à la température de saturation correspondant à sa pression.

3. Procédé selon la revendication 1 ou 2, dans lequel la vapeur d'eau a une température supérieure de 55,5 à 166,6 °C (100 à 300 °F) à la température de saturation correspondant à sa pression.

4. Procédé selon la revendication 2 ou 3, dans lequel la vapeur d'eau a une pression de 6,2 à 6,9 bars (75 à 85 livres par pied carré, pression manométrique).

5. Procédé selon les revendications 1 à 4, dans lequel l'étape (c) est exécutée de manière continue par traction du matériau composite entre deux courroies mobiles opposées (11, 10) à orifices dans une série de jets (45) de vapeur d'eau surchauffée en direction sensiblement perpendiculaire au plan des courroies (11, 10).

6. Procédé selon les revendications 1 à 5, dans lequel, dans l'étape (d), le matériau composite chauffé (42-44) est comprimé de manière continue par passage du matériau composite chauffé entre deux rouleaux de pression (13, 52).

7. Procédé selon les revendications 1 à 6, dans lequel la seconde feuille (42) est aussi perméable à la vapeur d'eau et, dans l'étape (c), une dépression est appliquée à la courroie (10) à orifices près de la seconde feuille (42) afin que l'aspiration de la vapeur d'eau à travers la première feuille (42) soit facilitée.

8. Procédé selon les revendications 1 à 7, dans lequel la première feuille (43) est une mousse de polyuréthanne à cellules ouvertes et la seconde feuille (42) est une étoffe décorative.

9. Procédé continu de collage de deux feuilles (43, 42) de matériau l'une à l'autre, à l'aide d'un adhésif (44) qui peut être activé par la chaleur, dans lequel l'une (43) au moins des feuilles (43, 42) est perméable à la vapeur d'eau, le procédé comprenant les étapes suivantes :
a) la formation d'un matériau composite (42-44) en couches comprenant la première et la seconde feuille (43, 42) et une couche (44) d'un adhésif (44) qui peut être activé par la chaleur ou qui durcit sous l'action d'humidité, entre les feuilles, la première feuille (43) étant perméable à la vapeur d'eau,
caractérisé par
b) la traction du matériau composite (42-44) entre deux courroies mobiles opposées (11, 10) à orifices dans une série de jets (45) de vapeur d'eau qui sont sensiblement perpendiculaires au plan du matériau composite, la température de la vapeur d'eau étant suffisamment élevée pour qu'elle active l'adhésif (44), la traction étant réalisée à une vitesse suffisamment faible pour que la vapeur d'eau active pratiquement la totalité de l'adhésif (44),
c) avant le durcissement de l'adhésif (44), le passage du matériau composite (42-44) traité par la vapeur d'eau entre deux rouleaux de pression (13, 52) destinés à comprimer le matériau composite (42-44),
d) l'extraction du matériau composite des rouleaux de pression (13, 52) afin qu'une pression ne lui soit plus appliquée, et
e) le durcissement naturel complet de l'adhésif (44).

10. Procédé selon les revendications 1 à 9, dans lequel l'adhésif (44) est un adhésif thermoplastique ayant une température de fusion comprise entre 60,0 et 176,7 °C (140 et 350 °F).

11. Procédé selon les revendications 1 à 10, dans lequel l'adhésif (44) est un polyuréthanne.

12. Procédé selon les revendications 1 à 11, dans lequel la première feuille (43) est choisie dans le groupe comprenant les tissus, les tricots, les étoffes et nappes fibreuses non-tissées, une mousse à cellules ouvertes et un panneau poreux de particules.

13. Procédé selon les revendications 1 à 12, dans lequel la seconde feuille (42) est choisie dans le groupe qui comprend un film de matière plastique, des nappes cellulosiques, des tissus, des tricots, des étoffes et nappes fibreuses non tissées, une mousse à cellules ouvertes et un panneau poreux de particules.

14. Procédé selon les revendications 1 à 13, dans lequel l'adhésif (44) est une résine synthétique choisie dans le groupe comprenant les polyamides, les polyesters et les polymères vinyliques.

15. Procédé selon les revendications 9 à 14, dans lequel la seconde feuille (42) est aussi perméable à la vapeur d'eau et, dans l'étape (b), une dépression est appliquée à la courroie à orifices près de la seconde feuille (42) afin que l'aspiration de la vapeur d'eau à travers la première feuille (43) soit facilitée.

16. Procédé selon les revendications 9 à 15, dans lequel la première feuille (43) est une doublure et la seconde feuille (42) est une étoffe d'habillement.

17. Appareil de collage continu de deux feuilles (42, 43 ) de matériaux l'une à l'autre, à l'aide d'un adhésif (44) qui peut être activé par la chaleur ou qui peut durcir sous l'action d'humidité, dans lequel l'une au moins des feuilles (42, 43) est perméable à la vapeur d'eau, caractérisé par
a) une paire de courroies transporteuses opposées (11, 10) sans fin à orifices, disposées afin qu'elles permettent le serrage entre elles d'un matériau composite formé de deux feuilles (42, 43) de matériaux et d'une couche intermédiaire d'adhésif (44), chaque courroie (11, 10) ayant une face interne et une face externe, la face externe étant celle qui est au contact du matériau composite (42-44) lorsque celui-ci est serré entre les courroies (11, 10),
b) un dispositif (12, 13, 38 , 14, 15) destiné à faire tourner les courroies (11, 10) en sens opposés afin que le matériau composite (42-44) soit transporté entre elles,
c) un plateau (16) monté près de la face interne de la première (11) des courroies (11, 10), le plateau (16) ayant une chambre fermée (18, 19, 20) qui a une surface perforée (52) tournée vers la courroie adjacente (11) dans la zone dans laquelle les deux courroies (11, 10) serrent le matériau composite (42-44),
d) un dispositif (21-30, 39-41, 45, 50) d'éjection de vapeur d'eau par les perforations (17) du plateau (16) avec une force suffisante pour que la vapeur traverse la courroie adjacente (11),
e) un dispositif (31-37) de refroidissement de la seconde (10) des courroies (11, 10) lors de son retour vers la tête de la zone de serrage, et
f) un dispositif (13, 52) de compression du matériau composite (42-44) après qu'il a quitté la zone d'éjection de vapeur d'eau.

18. Appareil selon la revendication 17, dans lequel le dispositif (13, 52) de compression du matériau composite (42-44) comporte deux rouleaux de pression (13, 52) montés près de l'extrémité de la première courroie transporteuse (11), et destinés à recevoir et comprimer le matériau composite (42-44) après que celui-ci (42-44) a quitté l'extrémité de la courroie (11).

19. Appareil selon la revendication 17 ou 18, comprenant un dispositif (23-28, 50) destiné à transmettre de la vapeur d'eau surchauffée à la chambre fermée (18-20) du plateau (16).

20. Appareil selon les revendications 17 à 19, comprenant un dispositif à part de la vapeur d'eau surchauffée et destiné à chauffer le plateau (16).

21. Appareil selon la revendication 20, dans lequel le dispositif de chauffage comporte au moins un élément de chauffage par résistance électrique, fixé au plateau (16).

22. Appareil selon la revendication 21, dans lequel l'élément de chauffage est monté à l'extérieur du plateau (16).

23. Appareil selon les revendications 17 à 22, dans lequel la première courroie (11) a une section d'ouverture comprise entre 30 et 60 % de la surface totale de la courroie (11), et la seconde courroie (10) a une section d'ouverture comprise entre 5 et 20 % de la surface totale de la courroie (10).

24. Appareil selon les revendications 17 à 23, dans lequel chacune des courroies (11, 10) est formée d'une étoffe ayant une température de dégradation qui dépasse 204,4 °C (400 °F).

25. Appareil selon les revendications 17 à 24, dans lequel les trous (17) du plateau (16) ont un diamètre compris entre 0,76 et 2,03 mm (0,030 et 0,080 pouce) et sont séparés par une distance qui ne dépasse pas 19,05 mm (0,750 pouce).

26. Appareil selon les revendications 17 à 25, dans lequel le plateau (16) est formé d'aluminium moulé.

27. Appareil selon la revendication 17 à 26, comprenant en outre un dispositif d'aspiration (31-37) monté à l'intérieur de la seconde courroie (10) à un emplacement tel qu'il peut aspirer l'air et la vapeur d'eau à travers les deux courroies (11, 10) le long de la zone de serrage.

28. Appareil selon les revendications 19 à 27, dans lequel le dispositif (23-28, 50) d'alimentation en vapeur d'eau est destiné à transmettre de la vapeur d'eau à la chambre fermée (18-20) du plateau (16) à une pression comprise entre 3,8 et 7,2 bars (40 et 90 psig) et à une température supérieure d'au moins 27,7 °C environ (50 °F) à la température de saturation correspondant à sa pression.

29. Appareil selon les revendications 17 à 28, dans lequel la surface externe de la première courroie (11) au moins est composée d'une résine de polytétrafluoréthylène.

30. Appareil selon les revendications 19 à 29, dans lequel le dispositif (23-28, 50) d'alimentation en vapeur d'eau comporte un réservoir ayant un dispositif (23, 24, 27) d'entrée de vapeur d'eau, un organe de chauffage interne par enroulement électrique et un dispositif (27, 50) de sortie de vapeur d'eau.

31. Appareil selon les revendications 19 à 30, dans lequel le dispositif (23-28, 50) d'alimentation en vapeur d'eau comporte au moins deux réservoirs (25, 28) raccordés en série, chaque réservoir (25, 28) ayant un dispositif (23, 24, 27) d'entrée de vapeur d'eau, un organe interne de chauffage par des enroulements électriques et un dispositif (27, 50) de sortie de vapeur d'eau.

32. Appareil selon les revendications 17 à 31, dans lequel le dispositif (31-37) de refroidissement de la seconde courroie (10) comporte un dispositif d'exposition de la courroie à l'air libre.

33. Appareil selon les revendications 27 à 32, dans lequel le dispositif d'aspiration (31-37) est destiné à faire circuler 0,28 à 1,70 m³ d'air par minute (10 à 60 pieds cubes par minute) par pied carré de surface de plateau, et les courroies transporteuses (11, 10) sont disposées horizontalement, la première courroie (11) étant placée au fond.

34. Appareil selon les revendications 17 à 33, dans lequel le plateau (16) est bombé et son côté convexe exerce une pression contre l'intérieur de première courroie (11).

35. Appareil selon les revendications 19 à 34, dans lequel le dispositif (23-28, 50) d'alimentation en vapeur d'eau est destiné à transmettre, à la chambre fermée (18-20) du plateau (16), de la vapeur d'eau à une pression comprise entre 6,2 et 6,9 bars (75 à 85 psig) et à une température supérieure de 55,5 à 166,6 °C (100 à 300 °F) à la température de saturation correspondant à sa pression.

36. Appareil selon les revendications 17 à 35, comprenant en outre un dispositif (46) de réchauffage de la première courroie (11) pendant son retour à la tête de la zone de serrage.
